# EUROPEAN PATENT APPLICATION

(11) **EP 4 604 565 A1**
(43) Date of publication of application: **20.08.2025**
(21) Application number: 23877684.3
(22) Date of filing: 12.10.2023
(51) Int. Cl.: H04N 23/68, H04N 23/58, H04N 23/54, H04N 23/55

(54) **CAMERA ACTUATOR AND CAMERA MODULE INCLUDING SAME**

(30) Priority: 14.10.2022 KR 20220132389
(71) Applicant: LG INNOTEK CO. LTD, Gangseo-gu Seoul 07796 (KR)
(72) Inventor: LEE, Sung Guk, Seoul 07796 (KR)
(74) Representative: DREISS Patentanwälte PartG mbB
(86) International application number: PCT/KR2023/015668
(87) International publication number: WO 2024/080761

(57) **Abstract**

Disclosed in an embodiment of the present invention is a camera device comprising: a stationary part; a moving plate which is disposed on the stationary part; a first movable part which is disposed on the moving plate; a first drive part which tilts the first movable part about at least one of a first axis and a second axis; a first ball part which is disposed between the moving plate and the first movable part; and a second ball part which is disposed between the moving plate and the stationary part, wherein the first drive part includes a first coil disposed in the first movable part and a first magnet disposed in the stationary part.

## Description

### [Technical Field]

Embodiments of the present invention relates to a camera actuator and a camera module including the same.

### [Background Art]

A camera is a device which captures pictures or videos of a subject and is mounted on a portable device, a drone, a vehicle, and the like. In order to improve image quality, a camera module or camera device may have an image stabilization (IS) function of correcting or preventing image shake caused by a user's movement, an autofocus (AF) function of automatically adjusting a gap between an image sensor and a lens to align a focal length of the lens, and a zooming function of increasing or decreasing a magnification of a distant subject through a zoom lens and capturing the subject.

Meanwhile, as the image sensor has a higher pixel count, resolution increases and the size of a pixel become smaller, and as the pixel become smaller, an amount of light received in the same period of time decreases. Accordingly, the higher the resolution of the camera, the more severe the hand shake caused by a slow shutter speed in a dark environment. A representative example of image stabilization (IS) technology is an optical image stabilization (OIS) technology which is technology of correcting movement by changing a path of light.

According to general OIS technology, the movement of the camera may be detected through a gyro sensor or the like, and a lens may be tilted or moved or a camera module including the lens and the image sensor may be tilted or moved based on the detected movement. When the lens or the camera module including the lens and the image sensor is tilted or moved for OIS, an additional space for tilting or movement needs to be secured around the lens or the camera module.

Meanwhile, actuators for OIS may be disposed around the lens. In this case, the actuators for OIS may include two axes perpendicular to an optical axis Z, that is, an actuator which is responsible for X-axis tilting and an actuator which is responsible for Y-axis tilting. In this case, when the actuators for OIS move the lens excluding the image sensor, image distortion occurs. Specifically, a distorted shape is present at an edge or a corner.

Further, since the image sensor and the lens are separated and only one of the image sensor and the lens is tilted, there is a problem that it is difficult to correct high-wide angle shake.

### [Disclosure]

### [Technical Problem]

A technical problem to be solved by an embodiment of the present invention is to provide a camera actuator and a camera module that prevent image distortion and enable high-wide angle shake correction by allowing an image sensor, a lens, and a substrate to rotate or move together.

Further, an embodiment of the present invention is directed to providing a camera actuator and a camera module that enable high-broadband correction by allowing all components excluding a housing to move or tilt and mechanically correct an image so that current consumption and a load are small during image processing compared to the movement of a lens or sensor.

In addition, an embodiment of the present invention is directed to providing a camera actuator with low heat generation by allowing a substrate part, a lens, and an image sensor to move together, and a camera module including the same.

In addition, a technical problem to be solved by an embodiment of the present invention is to provide a camera actuator applicable to an ultra-slim, ultra-small, and high-resolution camera.

The objects to be achieved in the embodiment is not limited thereto, and it can be said that the objects or effects that can be understood from the solution to the problem described below or the specific contents for implementing the invention are also included.

### [Technical Solution]

A camera actuator according to an embodiment of the present invention includes: a housing; a moving plate disposed in the housing; a movable part disposed on the moving plate and moving in a direction perpendicular to an optical axis direction; a first ball part disposed between the moving plate and the movable part; and a second ball part disposed between the moving plate and the housing, wherein the movable part includes a substrate part and a coil disposed on the substrate part.

The movable part may include: a sensor base disposed on the moving plate; a holder disposed on the substrate part; and a bobbin disposed in the holder.

The substrate part may be disposed on the sensor base.

The camera actuator may include: a first magnet disposed on the housing; a yoke disposed in the housing; and a second magnet disposed on the holder.

The sensor base may include a first groove in which the first ball part is disposed, and the housing may include a second groove in which the second ball part is disposed.

The bobbin may move along the optical axis direction.

The bobbin may move in response to the movement of the movable part.

The housing may include: a first housing side portion and a second housing side portion facing each other; and a third housing side portion and a fourth housing side portion facing each other, and the third housing side portion and the fourth housing side portion may be disposed between the first housing side portion and the second housing side portion.

The first housing side portion may include: a protrusion protruding outward; and an inner groove formed by the protrusion.

A height of the protrusion may be smaller than a maximum height of the first housing side portion.

The camera actuator may include a first magnet disposed on the housing, wherein the first magnet may include a first sub-magnet disposed on the second housing side portion and a second sub-magnet disposed on any one of the third housing side portion and the fourth housing side portion.

The camera actuator may include: a yoke disposed in the housing; and a holding magnet disposed on the sensor base, wherein the holding magnet and the yoke may overlap in the optical axis direction.

The substrate part may include: a first region; a second region extending upward from the first region; and a third region extending outward from the first region.

The third region may include: a first bent portion bent in the optical axis direction; a second bent portion bent outward from the first bent portion; and a third bent portion bent in a direction perpendicular to the optical axis direction.

The camera actuator may include a clamp disposed in the inner groove.

The clamp may be disposed spaced apart from the substrate part in the optical axis direction or in a direction perpendicular to the optical axis direction.

The camera actuator may include a second magnet disposed on the bobbin, wherein the coil includes a first coil and a second coil disposed in the second region, and the second coil may face the second magnet.

The second region may be disposed between the first coil and the first magnet.

The camera actuator may include an image sensor disposed on the substrate part.

The camera actuator may include a shaft disposed in the holder.

The camera actuator may include a second magnet disposed on the holder, and the shaft may include a magnetic material and form an attractive force with the second magnet.

The second magnet may be disposed between the second coil and the shaft.

A camera device according to another embodiment includes: a stationary part; a moving plate disposed on the stationary part; a first movable part disposed on the moving plate; a first driving part that tilts the first movable part based on at least one of a first axis and a second axis; a first ball part disposed between the moving plate and the first movable part; and a second ball part disposed between the moving plate and the stationary part, wherein the first driving part includes a first coil disposed on the first movable part and a first magnet disposed on the stationary part.

The first movable part may include an image sensor and a substrate part coupled to the image sensor.

The camera device may include: a second movable part disposed in the first movable part; and a second driving part that moves the second movable part in an optical axis direction, wherein the second driving part may include a second coil disposed on the first movable part and a second magnet disposed on the second movable part, and the substrate part may include a first substrate part to which the image sensor is coupled and a second substrate part on which the first coil and the second coil are disposed.

The first substrate part may include: a body part on which the image sensor is disposed; and an extending part connected to the body part and on which a connector or terminal is disposed.

The second substrate part may include a first substrate connected to the first substrate part and on which the first coil is disposed and a second substrate on which the second coil is disposed.

The first coil may include a first unit coil and a second unit coil, and the first substrate may include a first unit substrate on which the first unit coil is disposed and a second unit substrate on which the second unit coil is disposed.

The camera device may include a sensor base disposed between the moving plate and the substrate part.

The stationary part may include a cover that accommodates the first movable part, and the cover may include a first cover to which the first magnet is coupled and a second cover coupled to the first cover.

In still another embodiment, a camera device includes: a cover; a moving plate disposed in the cover; a substrate part disposed on the moving plate; an image sensor disposed on the substrate part; a holder disposed on the image sensor; a bobbin disposed in the holder; a first magnet disposed on the cover; a second magnet disposed on the bobbin; a first coil disposed on the substrate part and facing the first magnet and a second coil facing the second magnet; a first ball part disposed between the moving plate and the cover; and a second ball part disposed between the moving plate and the substrate part.

The first ball part may be disposed in a second axial direction, and the second ball part may be disposed in a first axial direction.

The first ball part and the second ball part may be integrally formed with the moving plate.

The first ball part and the second ball part may be respectively convex upward and downward.

The first ball part and the second ball part may be respectively disposed in grooves formed in an upper surface and a lower surface of the moving plate.

The substrate part may include a first substrate part to which the image sensor is coupled and a second substrate part on which the first coil and the second coil are disposed, and the first substrate part may include: a body part on which the image sensor is disposed; an extending part connected to the body part and on which a connector or terminal is disposed; and a clamp disposed between the extending part and the holder.

The cover may include a first cover to which the first magnet is coupled and a second cover coupled to the first cover, and the first cover may include a protrusion protruding outward and on which the extending part is disposed.

**In** yet another embodiment, a camera device includes: a stationary part; an imaging module disposed on the stationary part and including a substrate part, an image sensor disposed on the substrate part, a holder disposed on the image sensor, and a bobbin disposed in the holder; a moving plate disposed between the stationary part and the imaging module; a first ball part disposed between the moving plate and the stationary part; and a second ball part disposed between the moving plate and the imaging module.

The camera device may include a yoke disposed on the stationary part, and the imaging module may include: a sensor base disposed between the moving plate and the substrate part; and a holding magnet disposed on the sensor base.

The holding magnet and the yoke may overlap in an optical axis direction.

The camera device may include: a first magnet disposed on the stationary part; a second magnet disposed on the bobbin; a first coil disposed on the substrate part and facing the first magnet; and a second coil facing the second magnet.

### [Advantageous Effects]

A technical problem to be solved by an embodiment of the present invention can implement a camera actuator and a camera module that prevent image distortion and enable high-wide angle shake correction by allowing an image sensor, a lens, and a substrate to rotate or move together.

Further, an embodiment of the present invention can implement a camera actuator and a camera module that enable high-broadband correction by allowing all components excluding a housing to move or tilt and mechanically correct an image so that current consumption and a load are small during image processing compared to the movement of a lens or sensor.

**In** addition, an embodiment of the present invention can implement a camera actuator with low heat generation by allowing a substrate part, a lens, and an image sensor to move together, and a camera module including the same.

A technical problem to be solved by an embodiment of the present invention can implement a camera actuator applicable to an ultra-slim, ultra-small, and high-resolution camera.

The various beneficial advantages and effects of the present invention are not limited to the above-described contents, and can be more easily understood in a process of describing specific embodiments of the present invention.

### [Description of Drawings]

FIG. 1 is a perspective view of a camera module including a camera actuator according to an embodiment.
FIG. 2 is an exploded perspective view of the camera actuator according to the embodiment.
FIG. 3 is another perspective view of FIG. 2.
FIG. 4 is an exploded perspective view of a housing and a moving plate in the camera actuator according to the embodiment.
FIG. 5 is a view for describing the coupling or assembly of the housing and the moving plate in FIG. 4.
FIG. 6 is an exploded perspective view of a sensor base and a substrate part in the camera actuator according to the embodiment.
FIG. 7 is a view for describing the coupling or assembly between the sensor base and the substrate part in FIG. 5.
FIG. 8 is an exploded perspective view of a holder and a filter in the camera actuator according to the embodiment.
FIG. 9 is a view for describing the coupling or assembly between the holder and the filter in FIG. 8.
FIG. 10 is an exploded perspective view of a bobbin in the camera actuator according to the embodiment.
FIG. 11 is a view for describing the coupling or assembly between the bobbin and a second magnet in FIG. 10,
FIG. 12 is a view for describing the assembly of the camera actuator according to the embodiment.
FIG. 13 is a view for describing one type of actuation in the camera actuator according to the embodiment.
FIG. 14 is an exploded view of a movable part and a stationary part during the one type of actuation in the camera actuator according to the embodiment.
FIG. 15 is a view taken along line AA' in FIG. 1.
FIG. 16 is a view taken along line BB' in FIG. 1.
FIG. 17 is a perspective view of FIG. 16.
FIG. 18 is a perspective view of the substrate part in the camera actuator according to the embodiment.
FIG. 19A is a perspective view different from FIG. 18.
FIG. 19B is a perspective view of the moving plate according to the embodiment.
FIG. 19C is another perspective view of the moving plate according to the embodiment.
FIG. 19D is a view showing a lower surface of a sensor base of the movable part according to the embodiment.
FIG. 19E is a view showing an inner bottom surface of the stationary part (or the housing) according to the embodiment.
FIG. 20 is a view taken along line CC' in FIG. 1.
FIG. 21 is a side view of the camera actuator according to the embodiment excluding a cover and the housing.
FIG. 22 is a view for describing a holding force for another type of actuation in the camera actuator according to the embodiment.
FIG. 23 is a view for describing another type of actuation in the camera actuator according to the embodiment.
FIG. 24 is a view taken along line DD' in FIG. 23.
FIG. 25 is a view taken along line EE' in FIG. 23.
FIG. 26 is a plurality of perspective views of the holder in the camera actuator according to the embodiment.
FIG. 27 is a perspective view of a mobile terminal to which the camera module according to the embodiment is applied.
FIG. 28 is a perspective view of a vehicle to which the camera module according to the embodiment is applied.

### [Modes of the Invention]

Since the present invention may be subjected to various changes and have various embodiments, specific embodiments will be exemplified and described in the drawings. However, it should be understood that this is not intended to limit the present invention to specific embodiments, and includes all changes, equivalents, and substitutes included in the spirit and scope of the present invention.

Terms including ordinal numbers, such as second, first, and the like, may be used to describe various components, but the components are not limited by the terms. The terms are used only for the purpose of distinguishing one component from other components. For example, without departing from the scope of the present invention, a second component may be referred to as a first component, and similarly, a first component may also be referred to as a second component. The term 'and/or' includes any combination of a plurality of related listed items or any one item of the plurality of related listed items.

When a certain component is mentioned as being "connected" or "linked" to another component, it should be understood that the certain component may be directly connected or linked to the other component, but still another component may be present therebetween. On the other hand, when it is mentioned that the certain component is "directly connected" or "directly linked" to another element, it should be understood that there is no other component therebetween.

The terms used in the present application is only used to describe specific embodiments and are not intended to limit the present invention. A singular form includes a plural form unless the context clearly dictates otherwise. In the present application, it should be understood that terms such as "include" or "have" are intended to indicate the presence of a feature, number, step, operation, component, part, or a combination thereof described in the specification, and they do not exclude in advance the possibility of the presence or addition of one or more other features, numbers, steps, operations, components, parts or combinations thereof.

Unless otherwise defined, all terms used herein, including technical or scientific terms, have the same meaning as terms generally understood by those skilled in the art. Terms such as terms defined in generally used dictionaries should be interpreted as terms having meanings consistent with the meanings in the context of the related art, and should not be interpreted in an idealistic or excessively formal sense unless explicitly defined in the present application.

Hereinafter, the embodiments are described in detail with reference to the accompanying drawings, and the same reference numerals denote the same or similar components regardless of the reference numerals, and overlapping descriptions thereof will be omitted.

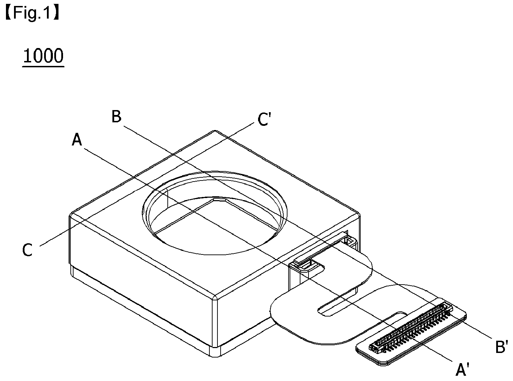

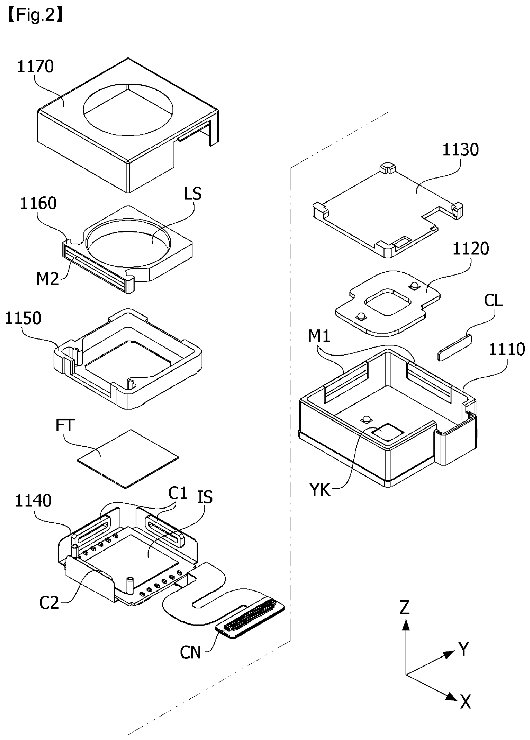

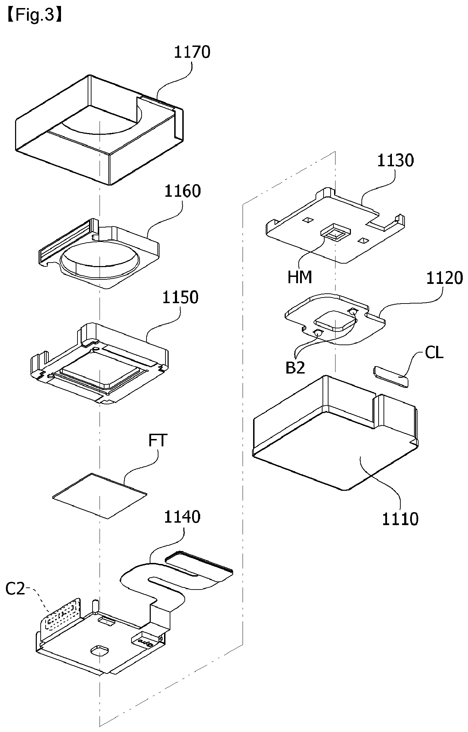

FIG. 1 is a perspective view of a camera module including a camera actuator according to an embodiment, FIG. 2 is an exploded perspective view of the camera actuator according to the embodiment, and FIG. 3 is another perspective view of FIG. 2.

Referring to FIG. 1, the camera module according to the embodiment may include a camera actuator 1000. Further, the camera module according to the embodiment may include the camera actuator 1000 and further include a lens moved or transferred by the camera actuator 1000. Hereinafter, the description will be based on the camera actuator 1000 without a lens. Furthermore, the camera actuator may be used interchangeably with ' lens transferring device,' ' lens driving device," 'lens moving device," or the like. Furthermore, the camera module may be used interchangeably with camera apparatus, camera device, imaging apparatus, imaging device, imaging module, and the like.

Further, the camera actuator 1000 according to the embodiment may be an autofocus (AF) actuator and/or optical image stabilization (OIS) actuator. For example, the actuator 1000 may be an actuator which realizes both AF and OIS. Further, the camera actuator 1000 according to the embodiment may be a zoom actuator which additionally performs movement of an additional movable lens group.

In addition, the camera actuator 1000 according to the embodiment may be a voice coil motor, a micro actuator, a silicon actuator, or the like, and may be applied in various ways such as a capacitive manner, a thermal manner, a bimorph manner, an electrostatic manner, and the like but is not limited thereto. In the embodiment, the camera actuator 1000 is described as an actuator using a magnet and a coil.

Further, OIS may also be used interchangeably with terms such as hand shake correction, optical image stabilization, optical image correction, image shake correction, and the like.

Referring further to FIGS. 2 and 3, the camera actuator 1000 and the camera device according to the embodiment may include a housing 1110, a moving plate 1120, a sensor base 1130, a substrate part 1140, a holder 1150, a bobbin 1160, and a cover 1170.

The housing 1110 may be located at a lower portion in the camera actuator 1000. The housing 1110 may have a cavity. For example, the housing 1110 may be formed in various shapes. The moving plate 1120, the sensor base 1130, the substrate part 1140, the holder 1150, and the bobbin 1160 described below may be located in the cavity of the housing 1110. The moving plate 1120, the sensor base 1130, the substrate part 1140, the holder 1150, and the bobbin 1160 may be sequentially disposed along an optical axis direction. Here, a bottom surface corresponds to the optical axis direction in a first direction. Further, the first direction is an X-axis direction in the drawing. The first direction (the X-axis direction) may be parallel to an incident direction of light incident on the image sensor. Here, the first direction (the X-axis direction) may correspond to a direction perpendicular to the image sensor or a direction from the image sensor toward a filter FT or lens LS. Further, as described above, the camera actuator 1000 may include the lens LS disposed in the bobbin 1160. In addition, a second direction is a Y-axis direction in the drawing, and may be a direction perpendicular to the first direction (the X-axis direction). In addition, a third direction is a Z-axis direction in the drawing, and may be a direction perpendicular to the first and second directions. Accordingly, the moving plate 1120, the sensor base 1130, the substrate part 1140, the holder 1150, and the bobbin 1160 may be sequentially disposed along the optical axis direction. Alternatively, the moving plate 1120, the sensor base 1130, the substrate part 1140, the holder 1150, and the bobbin 1160 may be sequentially disposed toward an upper side in the housing 1110.

Further, the bobbin 1160 may move along the optical axis direction or tilt or rotate in a direction perpendicular to the optical axis. Detailed description thereof will be described below.

Further, the housing 1110 may be a 'stationary part,' 'stationary member,' or 'stationary element' in the camera actuator 1000. That is, the housing 1110 may not move or rotate in the optical axis direction or in a direction perpendicular to the optical axis. Accordingly, components connected or coupled to the housing 1110 may also not move or rotate in the optical axis direction or in a direction perpendicular to the optical axis. However, a second ball part B2 seated in a second groove of the housing 1110 may rotate in a direction perpendicular to the optical axis direction.

The moving plate 1120 may be located on the bottom surface of the cavity of the housing 1110. The moving plate 1120 may be disposed in the housing 1110. The moving plate 1120 may rotate in a direction perpendicular to the optical axis direction.

A first ball part B1 and the second ball part B2 may be located on the moving plate 1120. The first ball part B1 and the second ball part B2 may include at least one ball. Any one of the first ball part B1 and the second ball part B2 may be located in an overlapping manner along any one of the second direction (the Y-axis direction) and the third direction (the Z-axis direction). Further, the other of the first ball part B1 and the second ball part B2 may be located in an overlapping manner along the other of the second direction (the Y-axis direction) and the third direction (the Z-axis direction). The first ball part B1 and the second ball part B2 may be disposed in parallel along directions intersecting or perpendicular to each other. Accordingly, rotation, axial rotation, or tilt may be performed by the first ball part B1 in any one direction of the second direction and the third direction. Further, rotation, axial rotation, or tilt may be performed by the second ball part B2 in the other direction of the second direction and the third direction.

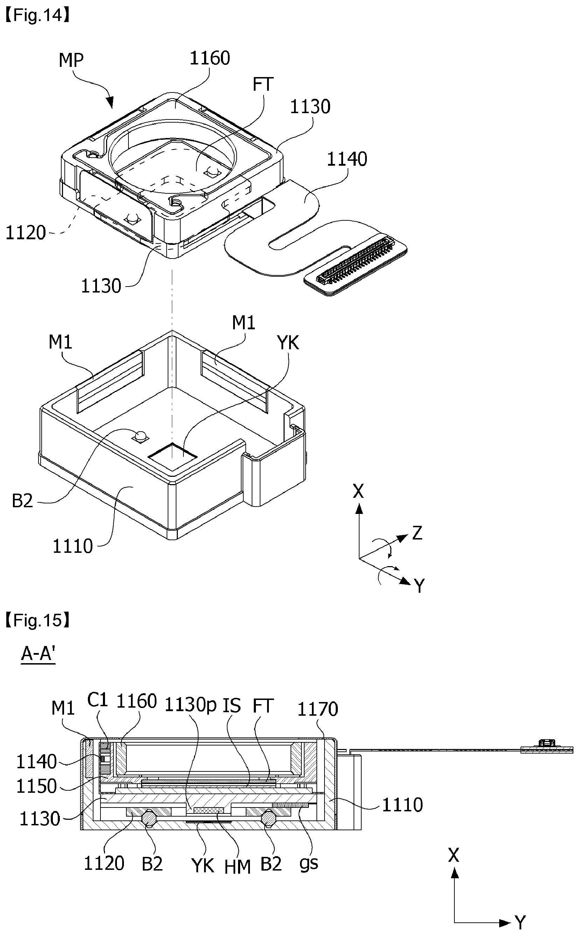

The first ball part B1 may be disposed between the moving plate 1120 and a movable part disposed on the moving plate 1120. The movable part (MP in FIG. 14) may include the moving plate 1120, the sensor base 1130, the substrate part 1140, the holder 1150, and the bobbin 1160. Specifically, the movable part (MP in FIG. 14) may include the substrate part 1140, the bobbin 1160, and coils C1 and C2 connected to the substrate part 1140. The movable part may rotate or move in a direction perpendicular to the optical axis direction. That is, an OIS function may be realized. Further, the movable part (MP in FIG. 14) may include the moving plate 1120. For example, when rotation is performed based on the first ball part B1, the movable part excluding the moving plate 1120 may rotate or move. When rotation is performed based on the second ball part B2, the movable part including the moving plate 1120 may rotate or move. Accordingly, hereinafter, description will be based on the movable part including the moving plate 1120.

Further, according to the embodiment, the camera device may be described as including the stationary part 1110, the camera module (or imaging module), and the moving plate 1120. In this case, the camera module may correspond to the above-described movable part. That is, the camera module or imaging module may be disposed on the stationary part and may include the substrate part 1140, an image sensor IS disposed on the substrate part, the holder 1150 disposed on the image sensor, and the bobbin 1160 disposed in the holder. Furthermore, the moving plate 1120 may be disposed between the stationary part and the camera module (or the imaging module). Further, the first ball part B1 may be disposed between the moving plate and the stationary part, and the second ball part may be disposed between the moving plate and the camera module (or the imaging module).

Further, in the embodiment of the present invention, the camera device may include the stationary part 1110 (the housing), the moving plate 1120, and a first movable part. As described above, the moving plate 1120 may be disposed on the stationary part. Further, the first movable part may be disposed on the moving plate. Specifically, the movable part may include a first movable part and a second movable part. In this case, the first movable part may include a component which moves by an OIS function. Further, the second movable part may include a component which moves by an AF function. For example, the first movable part may include the sensor base 1130 and the substrate part 1140. Further, the second movable part may include the holder 1150 and the bobbin 1160.

Furthermore, the camera device according to the embodiment may include a driving part which moves or rotates the movable parts (the first movable part and the second movable part). The driving part may include magnets and coils. In the embodiment, the driving part may include a first magnet M1, a second magnet M2, a first coil C1, and a second coil C2. Further, the driving part may include a first driving part which moves, tilts, or rotates the first movable part based on at least one axis of a first axis and a second axis. Here, the first axis may correspond to the Y-axis (or the Z-axis) in the second direction (or the third direction). The second axis may correspond to the Z-axis (or the Y-axis) in the third direction (or the second direction). Further, the first driving part may include the first magnet M1 and the first coil C1. In addition, the first driving part may include the first coil C1 disposed on the first movable part and the first magnet M1 disposed on the stationary part (the housing). In addition, the first movable part may be tilted by the first driving part based on at least one of the first axis and the second axis. In addition, moving along the axis may mean moving or shifting in the axial direction. In addition, movement toward the axis, or tilt (or rotation) based on the axis means the rotational movement of a component or member.

In addition, the second movable part may be disposed in the first movable part. The second movable part may move along the optical axis direction in the first movable part. In this case, the driving part may include a second driving part which moves the second movable part in the optical axis direction. The second driving part may include the second coil C2 and the second magnet M2. The second coil C2 may be disposed on the first movable part. Specifically, the second coil C2 may be disposed on the substrate part. Further, the second magnet M2 may be disposed on the second movable part. In the embodiment, the second magnet M2 may be disposed on the bobbin 1160.

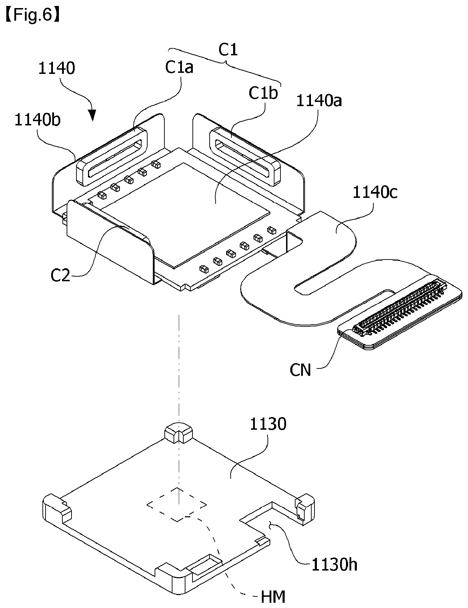

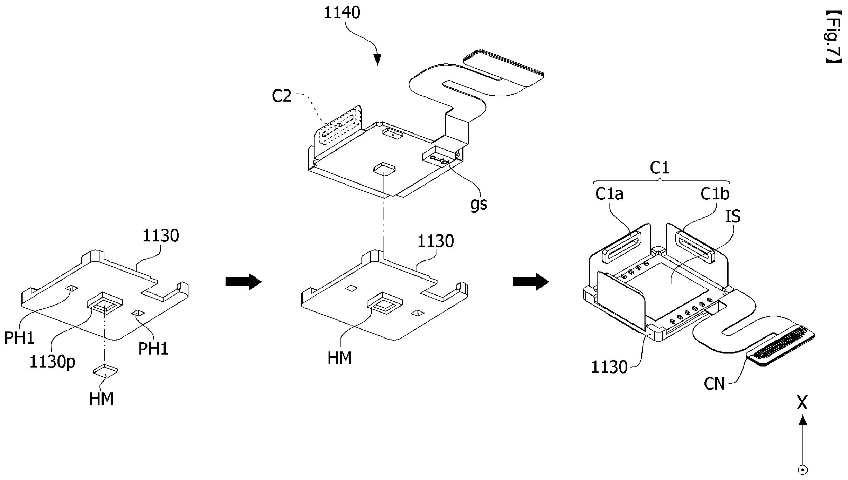

Furthermore, as described above, the first movable part may include an image sensor and a substrate part coupled to the image sensor. This substrate part 1140 may include a first substrate part and a second substrate part. Detailed description thereof will be described in FIGS. 6 and 7.

The sensor base 1130 may be disposed on the moving plate 1120. The first ball part B1 may be located between the sensor base 1130 and the moving plate 1120. Further, the first ball part B1 may be located between the first movable part and the moving plate 1120. The sensor base 1130 may be located on the moving plate 1120 and may include a holding magnet HM. The holding magnet HM may form an attractive force with a yoke YK in the housing 1110. Accordingly, even when the movable part moves, its position may be maintained within a certain range in the housing 1110, which is the stationary part. Conversely, the second ball part B2 may be located between the housing 1110 and the moving plate 1120. Further, the second ball part B2 may be disposed between the moving plate 1120 and the stationary part (the housing 1100).

The substrate part 1140 may be located on the sensor base 1130. The substrate part 1140 may include a circuit board having a wiring pattern which may be electrically connected, such as a rigid printed circuit board (rigid PCB), a flexible printed circuit board (flexible PCB), a rigid-flexible printed circuit board (rigid-flexible PCB), or the like. However, the present invention is not limited thereto.

The substrate part 1140 may include the coils C1 and C2. Further, the substrate part 1140 may be electrically connected to the coils C1 and C2. Further, the substrate part 1140 may include a connector connected to an external device. Further, a controller and a driver element (a driver integrated circuit (IC)) may be mounted on the substrate part 1140. Accordingly, the driver element of the substrate part 1140 may output a signal adjusted by a current applied to the coil in response to a signal received from the external device. Furthermore, various circuit elements may be mounted on the substrate part 1140. For example, a position detection sensor (a gyro sensor gs) may be mounted on the substrate part 1140.

The holder 1150 may be located on the substrate part 1140. The holder 1150 may be coupled to the bobbin 1160 disposed inside the holder 1150 for an autofocus (AF) function. In this case, as described below, a position between the holder 1150 and the bobbin 1160 may be maintained within a certain range by an attractive force between the second magnet M2 and a shaft SH. That is, the bobbin 1160 may not be separated from the holder 1150 even when the bobbin 1160 moves along the optical axis direction by the second magnet and the second coil. In other words, the attractive force between the second magnet M2 and the shaft SH may form a position holding force between the bobbin 1160 and the holder 1150. In this case, the shaft SH may be disposed in the holder 1150.

Further, the filter FT may be further disposed on the holder 1150. The filter FT may suppress the inflow of foreign substances into the image sensor IS mounted on the substrate part 1140. Accordingly, the filter FT may be located above the image sensor IS.

The filter FT and the image sensor IS may have the same size or different sizes. The size of the filter FT may change depending on an effective region of the image sensor IS.

As described above, the bobbin 1160 may accommodate the lens LS. Accordingly, the bobbin 1160 may move in the optical axis direction or in a direction perpendicular to the optical axis.

The cover 1170 may be located in one region (for example, an outermost region) of the camera actuator 1000 to surround or cover the movable part and/or stationary part. The cover 1170 may block or attenuate electromagnetic waves generated from the outside. Accordingly, errors in OIS and AF operations due to elements mounted on the substrate part 1140 may be reduced. Further, the cover 1170 may be fitted or fastened to the housing 1110 at a lower portion.

Furthermore, as described above, the camera actuator 1000 may include the image sensor IS, the filter FT, the first magnet M1, the second magnet M2, the first coil C1, the second coil C2, a clamp CL, the shaft SH, and the like. It should be understood that the camera actuator 1000 may further include other components described below in addition to the above-described components.

Further, the first magnet M1 may be disposed on the housing 1110. In addition, the yoke YK may be disposed in the housing 1110. The second magnet M2 may be disposed on the holder 1150. The clamp CL may be disposed in the housing 1110.

Further, the image sensor IS may receive light passing through the lens LS and convert an optical signal into an electrical signal. The image sensor IS may include various elements which perform this.

Furthermore, in the camera actuator or camera device according to the present invention, the housing 1110 may be used interchangeably with 'base,' 'stationary part,' 'first cover,' 'lower member,' 'lower support member,' and 'support member'. For example, in the embodiment, the cover may include a first cover and a second cover. The first cover may correspond to the housing 1110. Accordingly, the first magnet may be coupled to the first cover 1110. Accordingly, the moving plate 1120 may be located in the first cover or the cover.

Further, the second cover may correspond to the above-described cover 1170. That is, the camera device according to the embodiment may be described as including a cover including the housing 1110 (the first cover) and the cover 1170 (the second cover).

Furthermore, the holder 1150 may be referred to as a 'housing,' 'housing assembly,' or the like. For example, the camera device according to the embodiment may include the base 1110 and the holder 1150. Furthermore, the bobbin 1160 may be referred to as a 'lens carrier,' 'lens transfer part,' 'lens transfer member,' or the like.

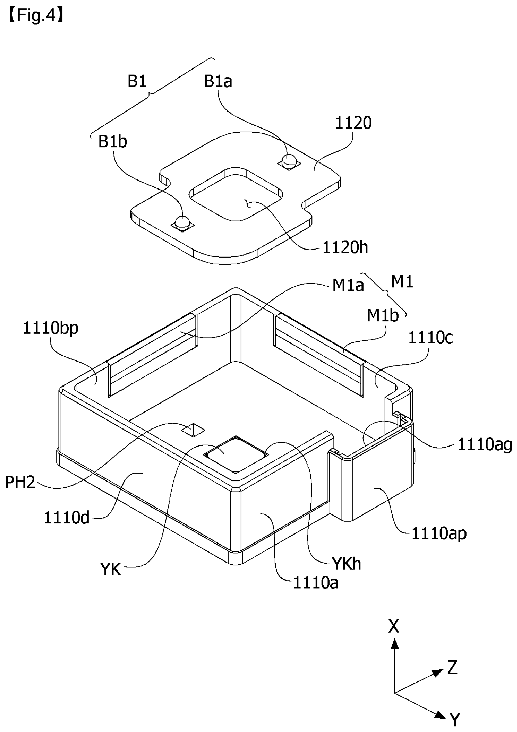

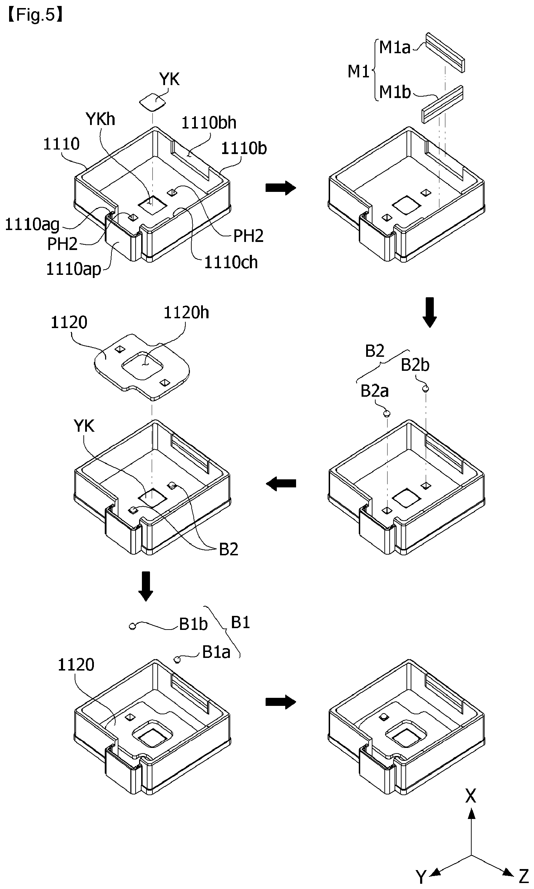

FIG. 4 is an exploded perspective view of the housing and the moving plate in the camera actuator according to the embodiment, and FIG. 5 is a view for describing the coupling or assembly of the housing and the moving plate in FIG. 4.

Referring to FIGS. 4 and 5, the moving plate 1120 may be located in the housing 1110. In the embodiment, the housing 1110 may include a first housing side portion 1110a, a second housing side portion 1110b, a third housing side portion 1110c, and a fourth housing side portion 1110d in addition to a bottom or a lower side portion.

The first housing side portion 1110a and the second housing side portion 1110b may be disposed to face each other. Further, the third housing side portion 1110c and the fourth housing side portion 1110d may be disposed between the first housing side portion 1110a and the second housing side portion 1110b.

The third housing side portion 1110c and the fourth housing side portion 1110d may be located to face each other. The third housing side portion 1110c and the fourth housing side portion 1110d may be in contact with each of the first housing side portion 1110a and the second housing side portion 1110b. For example, the first housing side portion 1110a and the second housing side portion 1110b may overlap in the second direction (the Y-axis direction) and may be disposed spaced apart from each other. The third housing side portion 1110c and the fourth housing side portion 1110d may overlap in the third direction (the Z-axis direction) and may be disposed spaced apart from each other.

First, the housing 1110 may include a second groove PH2 in which the second ball part is disposed in a bottom surface or lower inner surface. That is, the second ball part may be seated in the second groove PH2. For example, a coupling member (for example, grease or the like) for seating the second ball part may be located in the second groove PH2. Accordingly, the second ball part may easily tilt, rotate, or move in the second groove PH2.

The first housing side portion 1110a may include a protrusion 1110ap protruding outward. In other words, the first cover 1110 may include the protrusion 1110ap protruding outward and on which an extending part of the substrate part is disposed. That is, the housing 1110 may include the protrusion 1110ap protruding or extending outward from any one side portion or outer side surface. Further, the housing 1110 may include an inner groove 1110ag formed by the protrusion 1110ap. That is, the cavity may partially protrude outward due to the protrusion 1110ap of the first housing side portion 1110a. The above-described clamp and substrate part 1140 may be located in the inner groove 1110ag. In other words, the substrate part 1140 may extend outward by the inner groove 1110ap and may be easily connected to the external device. Furthermore, an increase in the size of the camera actuator may be easily suppressed by the substrate part extending outward through the inner groove 1110ap. That is, miniaturization of the camera actuator according to the embodiment may be realized.

Furthermore, a height of the protrusion 1110ap may be smaller than a maximum height of the first housing side portion 1110a. With this configuration, a space where the substrate part extends outward may be easily secured. Further, a more compact camera actuator may be provided.

Furthermore, the first magnet M1 may be disposed on the housing 1110. Further, the first magnet M1 may be located on the cover or first cover. The first magnet M1 may include a first sub-magnet M1a and a second sub-magnet M1b extending in directions perpendicular to each other.

Further, in the embodiment, the first sub-magnet M1a may be disposed on any one side portion excluding the first housing side portion 1110a. For example, the first sub-magnet M1a may be disposed on the second housing side portion 1110b. Further, the second sub-magnet M1b may be disposed on any one of the third housing side portion 1110c and the fourth housing side portion 1110d. That is, the first sub-magnet M1a and the second sub-magnet M1b may not overlap in the second direction or third direction. In other words, the first sub-magnet M1a and the second sub-magnet M1b may be disposed to be offset in the second direction or third direction.

Furthermore, the housing 1110 may include a yoke groove Ykh disposed on the bottom surface. The yoke groove Ykh may be located between a plurality of second grooves PH2. Accordingly, the attractive force between the housing 1110 and the sensor base may be largely formed at a center of the moving plate. Accordingly, the efficiency of the attractive force, the coupling force, or the holding force between the movable part and the housing 1110 may be enhanced. In other words, the movable part may receive a downward force (the attractive force) and the housing may receive an upward force (the attractive force) with the moving plate therebetween. In other words, the moving plate may be pressed by the housing and the movable part (for example, the sensor base).

Furthermore, the second housing side portion 1110b may include a first magnet groove 1110bh. Further, any one of the third housing side portion 1110c and the fourth housing side portion 1110d may include a second magnet groove 1110ch. In the embodiment, the third housing side portion 1110c may include the second magnet groove 1110ch.

First, the yoke YK may be seated in the yoke groove Ykh in the housing 1110. Further, the first sub-magnet M1a may be seated in the first magnet groove 1110bh. In addition, the second sub-magnet M1b may be seated in the second magnet groove 1110ch.

In addition, the second ball part B2 may be seated in the second groove PH2. The second ball part B2 may include a 2-1 ball B2a and a 2-2 ball B2b. The yoke YK may be located in a region between the 2-1 ball B2a and the 2-2 ball B2b.

Further, the moving plate 1120 may be located in the housing 1110. The moving plate 1120 may include a plate hole 1120h corresponding to the yoke YK or yoke groove Ykh. Accordingly, the coupling force between the yoke YK and a holding magnet to be described below may be further enhanced. Furthermore, the weight of the movable part may be reduced. Further, the plate hole 1120h may overlap the yoke YK or yoke groove Ykh in the optical axis direction.

In addition, the first ball part B1 may be located on the moving plate 1120. The first ball part B1 may include a 1-1 ball B1a and a 1-2 ball B1b. The 1-1 ball B1a and the 1-2 ball B1b may overlap and may be disposed spaced apart from each other along the third direction (the Z-axis direction) or along the second axis. The 2-1 ball B2a and the 2-2 ball B2b may overlap and may be disposed spaced apart from each other along the second direction (the Y-axis direction).

Furthermore, the center of the moving plate 1120 may correspond to or may be different from an intersecting point between an extending line which connects the plurality of first ball parts B1 and an extending line which connects the plurality of second ball parts B2.

In another example, the moving plate may be integrally formed with the first ball part and the second ball part. For example, the moving plate may be formed in a structure having a plate and protrusions (corresponding to the ball parts) protruding upward/downward on both surfaces of the plate. For example, the protrusion may correspond to a partial shape of a sphere. For example, the protrusion may have a semicircular shape or hemispherical shape. Further, the first ball part and the second ball part may be disposed in the grooves respectively formed in the upper and lower surfaces of the moving plate. The first ball part may be disposed in the groove disposed in the upper surface of the moving plate. Further, the second ball part may be disposed in the groove disposed in the lower surface of the moving plate.

In addition, the holding magnet to be described below may be disposed adjacent to the yoke YK. The holding magnet may overlap the yoke YK in the optical axis direction. Accordingly, as described above, the coupling force between the sensor base and the housing may be further enhanced.

FIG. 6 is an exploded perspective view of the sensor base and the substrate part in the camera actuator according to the embodiment, and FIG. 7 is a view for describing the coupling or assembly between the sensor base and the substrate part in FIG. 5.

Referring to FIGS. 6 and 7, the sensor base 1130 may include a base protrusion 1130p protruding downward. The base protrusion 1130p may be located on a lower surface of the sensor base 1130. Further, the sensor base 1130 may include a first groove PH1 disposed in the lower surface. The number of first grooves PH1 may be at least one or more corresponding to the number of first balls. Similarly, the above-described second groove may also correspond to the number of second balls. A plurality of first grooves PH1 may be provided corresponding to the number of first balls, and the base protrusion 1130p may be located between the plurality of first grooves PH1. Accordingly, the base protrusion 1130p or holding magnet HM may be located between adjacent first balls. Accordingly, the first ball and the base protrusion 1130p or holding magnet HM may overlap in a direction perpendicular to the optical axis direction (for example, the third direction or the Z-axis direction). The holding magnet HM may be located on the base protrusion 1130p. With this configuration, a distance between the holding magnet HM and the above-described yoke may decrease. Specifically, the base protrusion 1130p may overlap the plate hole in a direction perpendicular to the optical axis. Accordingly, the attractive force between the holding magnet HM and the yoke may be further enhanced. That is, the coupling force or holding force between the movable part and the housing may be enhanced.

Furthermore, the sensor base 1130 may include a base hole or groove 1130h. A space for circuit elements (gyro sensors or the like) located under the substrate part 1140 may be secured through the base groove 1130.

Further, the substrate part 1140 may be located on the sensor base 1130. The substrate part 1140 may be coupled to the sensor base 1130 through a coupling member, a contact member, or the like. Alternatively, the substrate part 1140 may be fastened to the sensor base 1130 in various ways.

The substrate part 1140 may include a first region 1140a, a second region 1140b, and a third region 1140c. An image sensor may be disposed in the first region 1140a.

Further, the second region 1140b may extend upward from the first region 1140a. The second region 1140b may overlap the first magnet and the second magnet in the second direction or the third direction.

Further, the third region 1140c may extend outward from the first region 1140a. The third region 1140c may include at least one bent portion. Further, a connector CN may be located at an end portion. The substrate part 1140 may be electrically connected to an external electronic device through the connector CN. Detailed description thereof will be described below.

The first region 1140a may be formed of a rigid PCB. The second region 1140b and the third region 1140c may be formed of a flexible PCB, a rigid-flexible PCB, and the like.

Further, the first coil C1 and the second coil C2 may be located in the second region 1140b. The movable part may move or rotate in a direction perpendicular to the optical axis direction by a signal (for example, a current) applied to the first coil C1. That is, the OIS function may be realized. Further, the movable part may move along the optical axis direction by a signal (for example, a current) applied to the second coil C2. That is, the AF function may be realized. To this end, the first coil C1 may include a first sub-coil C1a and a second sub-coil C1b. The first sub-coil C1a may be positioned to correspond to any one of the above-described first sub-magnet and second sub-magnet. The second sub-coil C1b may be positioned to correspond to the other of the first sub-magnet and the second sub-magnet. For example, the first sub-coil C1a may be positioned to correspond to the first sub-magnet. The first sub-coil C1a may overlap the first sub-magnet in the second direction. The second sub-coil C1b may be positioned to correspond to the second sub-magnet. The second sub-coil C1b may overlap the second sub-magnet in the third direction.

In the case of coupling or assembly between the sensor base 1130 and the substrate part 1140, the substrate part 1140 may be seated on the sensor base 1130 after the holding magnet HM is mounted on the sensor base 1130. The first coil C1 and the second coil C2 may be mounted before or after the substrate part 1140 is seated on the sensor base 1130. Furthermore, the gyro sensor gs may be mounted to the substrate part 1140 before or after the substrate part 1140 is seated on the sensor base 1130.

Further, as described above, the first movable part may include the image sensor and the substrate part coupled to the image sensor.

**In** addition, the substrate part 1140 may include the first substrate part and the second substrate part. The image sensor may be mounted on the first substrate part. Specifically, the first substrate part may include a body part on which the image sensor is disposed and an extending part connected to the body part and on which a connector or terminal is disposed. That is, the first substrate part may include the above-described first region 1140a and third region 1140c. Furthermore, the body part may correspond to the above-described first region 1140a. Further, the extending part may correspond to the above-described third region 1140c.

The first coil and the second coil may be disposed on the second substrate part. That is, the second substrate part may correspond to the above-described second region 1140b.

Accordingly, the second substrate part may include a first substrate connected to the first substrate part and on which the first coil C1 is disposed, and a second substrate on which the second coil is disposed. That is, the second region 1140b may include the first substrate on which the first coil C1 is disposed and the second substrate on which the second coil C2 is disposed.

The first coil C1 may include a first unit coil and a second unit coil. That is, the first unit coil may correspond to the first sub-coil C1a. Further, the second unit coil may correspond to the second sub-coil C1b. **In** addition, the first unit coil and the second unit coil may generate a driving force in which the first movable part tilts or rotates based on axes intersecting each other.

Furthermore, the first substrate or second region may include a first unit substrate on which the first unit coil is disposed and a second unit substrate on which the second unit coil is disposed. The first unit substrate and the second unit substrate may not at least partially overlap in the first direction or the second direction. Further, the first and second unit substrates may be offset in the first direction or the second direction. Extending directions of the first unit substrate and the second unit substrate or extending directions of long sides of the first and second unit coils may be perpendicular to each other or intersect each other.

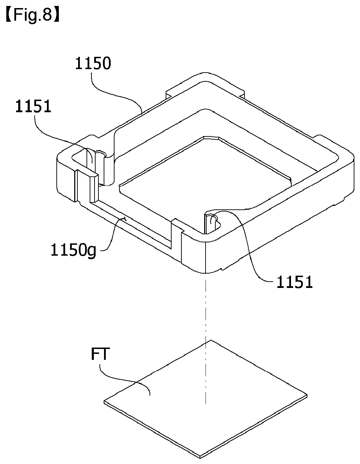

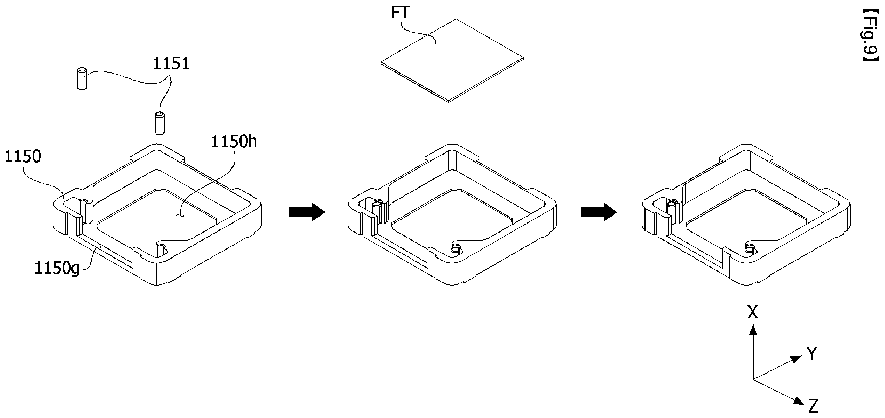

FIG. 8 is an exploded perspective view of the holder and the filter in the camera actuator according to the embodiment, and FIG. 9 is a view for describing the coupling or assembly between the holder and the filter in FIG. 8.

Referring to FIGS. 8 and 9, the holder 1150 may include a holder hole 1150h. The holder hole 1150h may be located at a center of the holder 1150. The holder hole 1150h may be positioned to correspond to the filter FT or the image sensor IS. Furthermore, the holder 1150 may include an accommodation groove in which the bobbin is accommodated. Accordingly, the bobbin described below may be located in the holder 1150. The filter FT may be located to overlap the holder hole 1150h in the optical axis direction or in the first direction (the X-axis direction). That is, the filter FT may cover the holder hole 1150h. Accordingly, foreign substances may be prevented from entering the image sensor under the holder 1150 through the holder hole 1150h.

The holder 1150 may include a holder groove 1150g located on a side portion. The holder groove 1150g may correspond to a position of the second coil. Further, the second magnet may be located on the holder groove 1150g side. That is, the intensity of an electromagnetic force generated by the second magnet and the second coil may be further enhanced through the holder groove 1150g. In this case, the first coil disposed on the substrate part may face the first magnet. Further, the second magnet and the second coil may face each other. In other words, since there is no obstacle between the second magnet and the second coil due to the holder groove 1150g, the intensity of the electromagnetic force generated by the second coil and the second magnet may increase. Furthermore, a shaft 1151 may be located in the holder 1150. The shaft 1151 may be a shaft extending along the optical axis direction. The shaft may be located adjacent to the holder groove 1150g.

The holder 1150 may be coupled to or assembled with the shaft 1151 and the filter FT. The filter FT may be formed of glass. The shaft 1151 may include a magnetic material. Accordingly, an attractive force between the shaft 1151 and the second magnet may be formed. In other words, a coupling force or holding force may be formed between the holder 1150 and the bobbin. Accordingly, the bobbin may move in the holder 1150 even when moving along the optical axis direction.

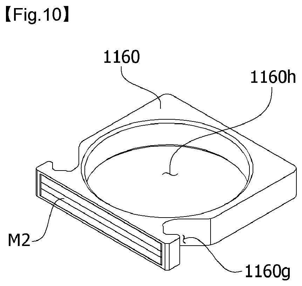

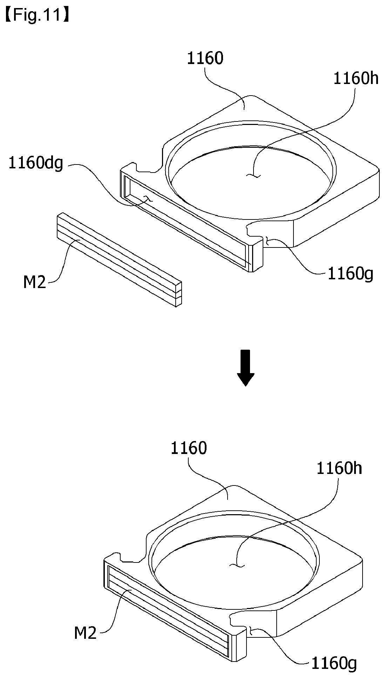

FIG. 10 is an exploded perspective view of the bobbin in the camera actuator according to the embodiment, and FIG. 11 is a view for describing the coupling or assembly between the bobbin and the second magnet in FIG. 10,

Referring to FIGS. 10 and 11, the bobbin 1160 may be located in the holder 1150. The bobbin 1160 may include a carrier groove 1160g formed on the side portion. The carrier groove 1160g may be located adjacent to the second magnet M2 mounted on the side portion. That is, the second magnet M2 may be located on the bobbin 1160. Furthermore, the shaft may be located in the carrier groove 1160g. In this case, the second magnet M2 may overlap the shaft in a direction perpendicular to the optical axis (for example, the third direction).

Furthermore, the bobbin 1160 may include a carrier hole 1160h. The above-described lens may be located in the carrier hole 1160h.

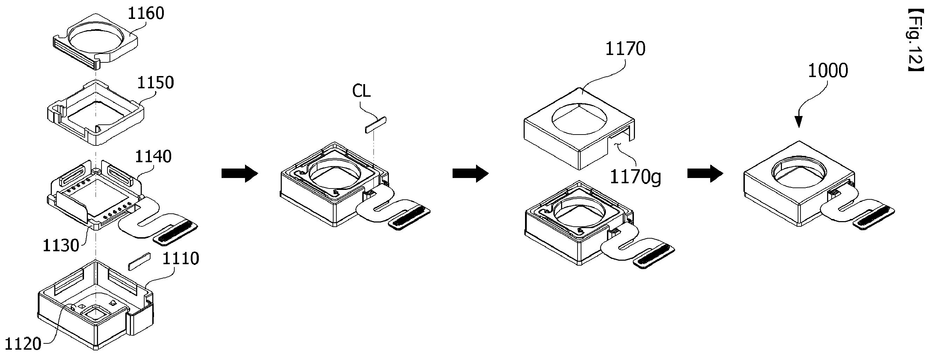

FIG. 12 is a view for describing the assembly of the camera actuator according to the embodiment.

Referring to FIG. 12, the sensor base 1130, the substrate part 1140, the holder 1150, and the bobbin 1160 may be located or mounted in the housing 1110 in which the moving plate 1120 is mounted. Accordingly, the movable part may be assembled or mounted in the housing 1110, which is the stationary part. Further, the clamp CL may be located in the inner groove of the housing 1110. In the embodiment, the clamp CL may be disposed between the extending part (the third region) and the holder. After the clamp CL is disposed in the inner groove, the cover 1170 may surround the outside of the housing 1110. The cover 1170 may also include a cover groove 1170g disposed on one side. The cover groove 1170g may be positioned to correspond to a position of the third region of the substrate part 1140. That is, a space where the substrate part 1140 extends outward through the cover groove 1170g may be formed.

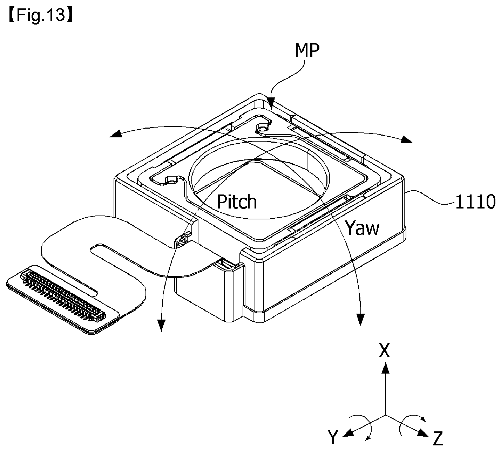

FIG. 13 is a view for describing one type of actuation in the camera actuator according to the embodiment, and FIG. 14 is an exploded view of the movable part and the stationary part during the one type of actuation in the camera actuator according to the embodiment.

Referring to FIGS. 13 and 14, a movable part MP may rotate in a direction (the second direction or the third direction) perpendicular to the optical axis direction (the X-axis direction) or based on the direction (the second direction or the third direction) perpendicular to the optical axis direction (the X-axis direction).

For example, the movable part MP may rotate (yaw) in a direction perpendicular to the optical axis direction (for example, the second direction). Further, the movable part MP may rotate (pitch) in a direction perpendicular to the optical axis direction (for example, the third direction).

In addition, in the case of rotation (yaw), the moving plate may also rotate. More specifically, since the second ball part B2 seated in the housing 1110 is disposed along the second direction (the Y-axis direction) or along the first axis, the moving plate 1120 may also rotate for the rotation (yaw) based on the second direction.

Further, in the case of rotation (pitch), the moving plate may not rotate. More specifically, since the first ball part B1 disposed between the moving plate 1120 and the sensor base 1130 is disposed in the third direction (the Z-axis direction), the moving plate 1120 may not rotate for the rotation (pitch) based on the third direction.

The rotation (yaw or pitch) may be implemented by an electromagnetic force between the first magnet M1 and the first coil of the substrate part 1140. The substrate part 1140 may rotate (yaw or pitch) by an electromagnetic force generated in the optical axis direction or in a direction opposite to the optical axis direction at a position of the first coil.

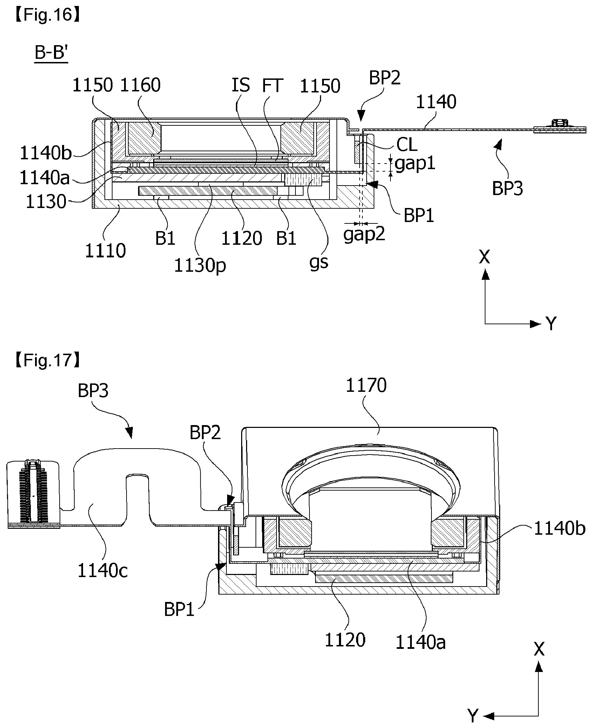

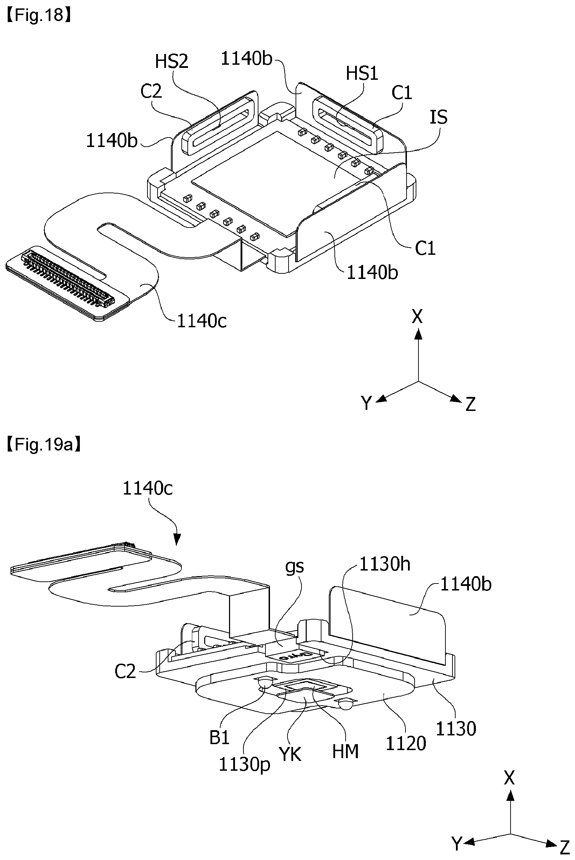

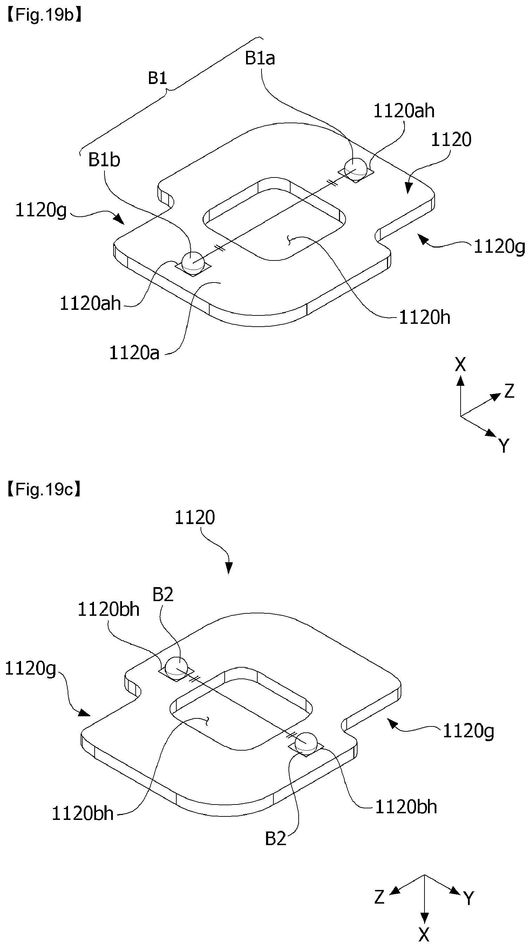

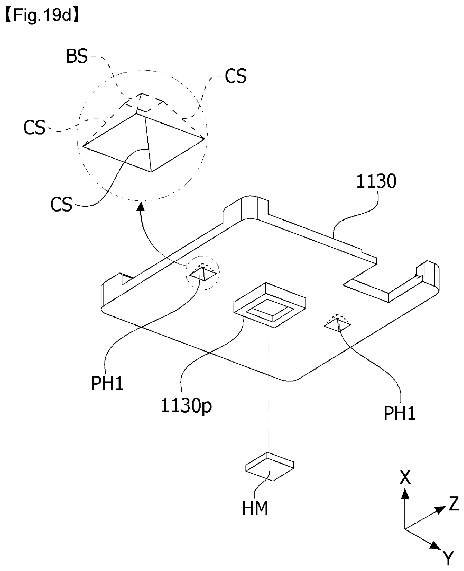

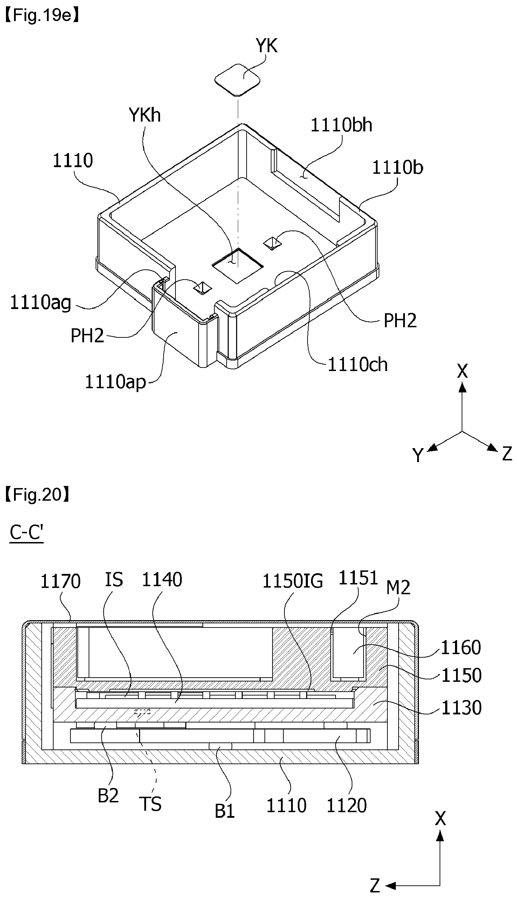

FIG. 15 is a view taken along line AA' in FIG. 1, FIG. 16 is a view taken along line BB' in FIG. 1, FIG. 17 is a perspective view of FIG. 16, FIG. 18 is a perspective view of the substrate part in the camera actuator according to the embodiment, FIG. 19A is a perspective view different from FIG. 18, FIG. 19B is a perspective view of the moving plate according to the embodiment, FIG. 19C is another perspective view of the moving plate according to the embodiment, FIG. 19D is a view showing a lower surface of the sensor base of the movable part according to the embodiment, and FIG. 19E is a view showing an inner bottom surface of the stationary part (or the housing) according to the embodiment.

Referring to FIGS. 15 to 17, the substrate part 1140 may include the first region 1140a, the second region 1140b, and the third region 1140c. In this case, the first region 1140a may overlap the image sensor IS and filter FT in the optical axis direction or in the first direction (the X-axis direction).

Furthermore, the first coil C1 and the first magnet M1 may overlap in the second direction (the Y-axis direction). Further, a position detection sensor (for example, a Hall sensor) may be disposed inside the coil according to embodiment.

In addition, the first coil C1 and the first magnet M1 (specially, the first sub-coil and the first sub-magnet) may overlap the bobbin 1160 and the holder 1150 in the second direction.

The holding magnet HM may overlap the yoke YK in the optical axis direction or in the first direction (the X-axis direction). Furthermore, the yoke YK and the holding magnet HM may be located between adjacent second ball parts B2. In the embodiment, the adjacent second ball parts B2 may overlap the yoke YK and the holding magnet HM in the second direction (the Y-axis direction).

Further, in the substrate part 1140, the second region 1140b may extend upward from the first region 1140a. In addition, the third region 1140c may extend outward from the first region 1140a. In the embodiment, the third region 1140c may extend in the second direction (the Y-axis direction).

The third region 1140c according to the embodiment may include a first bent portion BP1 adjacent to the outside of the first region 1140a and bent in the optical axis direction, a second bent portion BP2 connected to one end of the first bent portion BP1 and bent outward, and a third bent portion BP3 connected to one end of the second bent portion BP2 and bent in a direction perpendicular to the optical axis direction (the second direction or the third direction).

First, even when the substrate part 1140 moves, tilts, or rotates in a direction perpendicular to the optical axis by the OIS function, shape deformation or reliability deterioration may be suppressed through the third bent portion BP3.

Further, the substrate part 140 may easily extend upward without further increasing a length of the substrate part 140 in the first direction through the first bent portion BP1. In addition, the second bent portion BP2 may be located between the upper surface and the lower surface of the camera actuator. The first bent portion BP1 may also be located between the upper surface and the lower surface of the camera actuator. That is, the tilting or moving substrate part may extend outward while maintaining the miniaturization of the camera actuator.

Further, the clamp CL may be located in the inner groove 1110ag. The clamp CL may be disposed spaced apart (gap1 or gap2) from the substrate part 1140 in the first direction (the x-axis direction), the second direction (the Y-axis direction), or the third direction. In other words, the clamp CL may be disposed spaced apart from the substrate part 1140 in the optical axis direction or in a direction perpendicular to the optical axis direction. That is, the region (the third region) having the flexible circuit board in the substrate part 1140 for tilting or rotating the movable part may have at least one bent portion. In this case, the clamp CL may maintain a shape of the bent portion (the first bent portion or second bent portion). The clamp CL may be an injectionmolded article made of a non-magnetic material, resin, or the like.

Referring further to FIGS. 18 and 19A, the first coil C1 may be located in the second region 1140b. Further, the second coil C2 may also be located in the second region 1140b. Furthermore, Hall sensors HS1 and HS2 may also be located in the second region 1140b. Further, the image sensor IS may be located in the first region 1140a. In addition, the gyro sensor gs may be located under the first region 1140a. For example, the gyro sensor gs and the image sensor may be respectively disposed on opposite surfaces of the first region 1140a (for example, an upper surface and a lower surface). Further, the moving plate 1120 may include a groove formed in a side portion to minimize an overlapping region with the gyro sensor gs in the optical axis direction. For example, the base groove 1130h and the moving plate 1120 may be at least partially offset in the optical axis direction.

Furthermore, the gyro sensor gs and the image sensor IS may be located on different surfaces of the first region 1140a. Accordingly, space efficiency may be enhanced. That is, the camera actuator according to the embodiment may easily provide a space for the movement or tilting of the substrate part 1140 and the elements (the gyro sensor, the image sensor, the coil, the Hall sensor, and other circuit elements) mounted on the substrate part. Referring further to FIGS 19A to 19E, the moving plate 1120 may include a plate hole 1120h located at the center. The plate hole 1120h may at least partially overlap the base protrusion 1130p in the optical axis direction (the X-axis direction).

The base protrusion 1130p may pass through at least a partial region of the plate hole 1120h. Furthermore, the moving plate 1120 may include an inwardly concave groove 1120g in an edge. Accordingly, the weight reduction of the moving plate 1120 and a space where elements mounted under the sensor base 1130 or substrate part 1140 are disposed may be easily secured.

Furthermore, first seating grooves 1120ah disposed spaced apart in the third direction (the Z-axis direction) may be located in an upper surface 1120a of the moving plate 1120. The first seating grooves 1120ah may be disposed to face each other based on the plate hole 1120h. Alternatively, the plurality of first seating grooves 1120ah may be disposed symmetrically to each other based on a center of the plate hole 1120h. The first ball part B1 may be seated in the first seating groove 1120ah. The first ball part B1 and the first seating groove 1120ah may be joined to each other by a joining member (for example, epoxy, grease, or the like). Further, a bisecting point between the first seating grooves 1120ah may correspond to the center of the moving plate or plate hole. Accordingly, the accuracy of rotation may be enhanced. Further, the first seating grooves 1120ah may overlap along the third direction. **In** addition, the plurality of first seating grooves 1120ah may be disposed spaced apart from each other in the third direction.

**In** addition, second seating grooves 1120bh may be located in the lower surface 1120b of the moving plate 1120. The second seating grooves 1120bh may be disposed to face each other based on the plate hole 1120h. Alternatively, the plurality of second seating grooves 1120bh may be disposed symmetrically each other based on the center of the plate hole 1120h. The second ball part B2 may be seated in the second seating groove 1120bh. The second ball part B2 and the second seating groove 1120bh may be joined to each other by a joining member (for example, epoxy, grease, or the like.). Further, a bisecting point between the second seating grooves 1120bh may correspond to the center of the moving plate or plate hole. Accordingly, the accuracy of rotation may be enhanced. Further, the plurality of second seating grooves 1120bh may be disposed spaced apart from each other in the second direction (the Y-axis direction). Furthermore, the second seating grooves 1120bh may overlap each other in the second direction (the Y-axis direction).

Further, the holding magnet HM may be seated in a groove formed in the base protrusion 1130p. **In** addition, the sensor base 1130 may include the first groove PH1 disposed in the lower surface. The number of first grooves PH1 may be at least one or more corresponding to the number of first balls. The first groove PH1 may be in contact with the first ball. Furthermore, the first grooves PH1 may overlap along the third direction in correspondence with the first ball. The first grooves PH1 may be disposed in parallel along the third direction. The first groove PH1 may be in contact with the first ball part B1 at at least some points. Furthermore, the first groove PH1 may be formed in various structures. For example, the first groove PH1 may have at least one surface (a bottom surface or an inclined surface) corresponding to the number of contact points with the first ball. For example, the first groove PH1 may have one bottom surface BS and a plurality of inclined surfaces CS. When the number of inclined surfaces CS increases, the number of contact points between the first groove PH1 and the first ball part B1 may also increase.

Furthermore, the yoke groove Ykh may be formed in the bottom surface of an inner side surface of the stationary part or housing 1110. The yoke may be disposed in the yoke groove Ykh. Furthermore, the yoke groove Ykh may at least partially overlap the base protrusion 1130p in the optical axis direction. Accordingly, an attractive force may be enhanced. Furthermore, the second groove PH2 may be formed in a bottom surface of the inner side surface of the stationary part. The second grooves PH2 may be disposed in parallel in the second direction (the Y-axis direction). The second grooves PH2 may be disposed spaced apart from each other in the second direction and overlap in the second direction. The yoke groove YKh may be disposed between the second grooves PH2 spaced apart from each other. A center of the yoke groove YKh may be located on a bisecting line of the second groove PH2.

Furthermore, the second groove PH2 may also be included. The second groove PH2 may be formed in various structures. For example, the second groove PH2 may have at least one surface (a bottom surface or an inclined surface) corresponding to the number of contact points with the first ball. For example, the second groove PH2 may have one bottom surface and a plurality of inclined surfaces. When the number of inclined surfaces increases, the number of contact points between the second groove PH2 and the second ball part B2 may also increase.

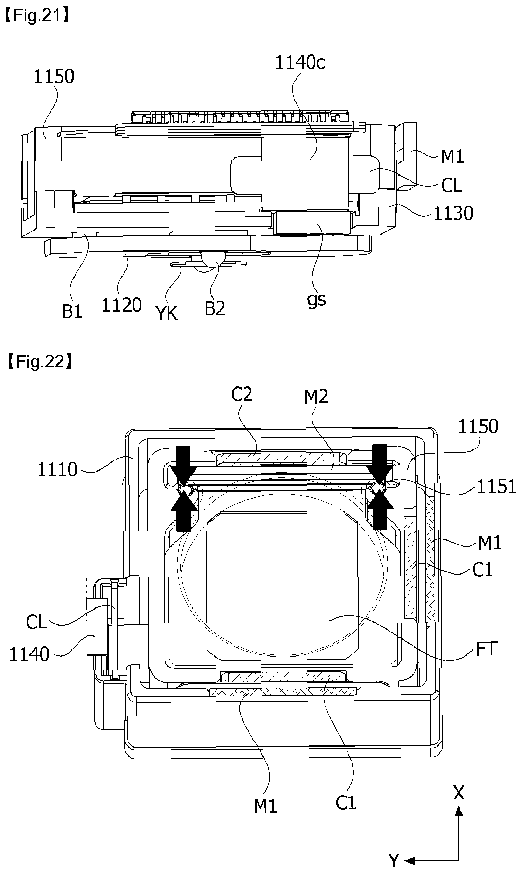

FIG. 20 is a view taken along line CC' in FIG. 1, and FIG. 21 is a side view of the camera actuator according to the embodiment excluding the cover and the housing.

Referring further to FIGS. 20 and 21, a temperature sensor TS or the like may be further mounted on the substrate part 1140. In this case, the temperature sensor TS may be disposed under the first region 1140a in the substrate part 1140. Further, in order to secure a space where the temperature sensor TS is located, the sensor base 1130 may further include a groove, a recess, or the like.

Furthermore, in order to reduce contact with circuit elements disposed on the first region 1140a of the substrate part 1140, the lower surface of the holder 1150 disposed on the sensor base 1130 may include a groove 1150IG. Accordingly, reliability deterioration due to contact between the circuit elements on the substrate part 114 and the holder 1150 or high temperature may be reduced.

Furthermore, the holder may further include a groove in the lower surface to secure a certain separation distance in the optical axis direction from the circuit elements (for example, a capacitor or the like) on the first region. Accordingly, interference between the circuit elements and holder may be minimized.

Furthermore, weight reduction of the camera actuator may be realized through the groove formed in the holder 1150 or sensor base 1130.

Furthermore, the sensor base 1130 may have a double step to secure a space for the third region 1140c of the substrate part 1140. That is, the sensor base 1130 may further include a groove connected to the base hole 1130h. With this configuration, an impact between the flexible third region 1140c and the sensor base 1130 when the substrate part 1140 tilts may be prevented or reduced.

Further, the third region 1140C and the gyro sensor gs may overlap in the optical axis direction. Accordingly, space efficiency for the circuit elements may be enhanced.

Further, the clamp CL may overlap the third region 1140c in the second direction.

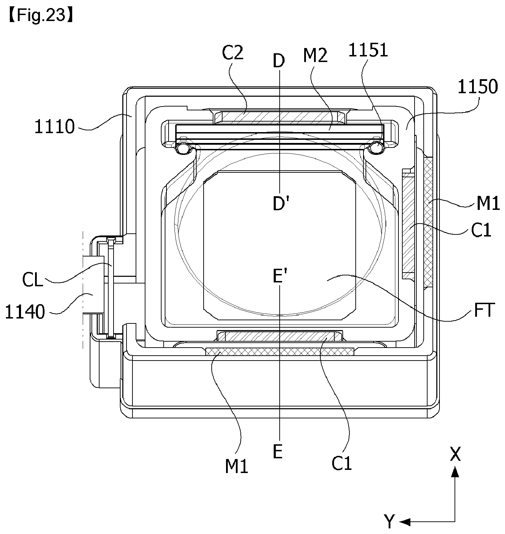

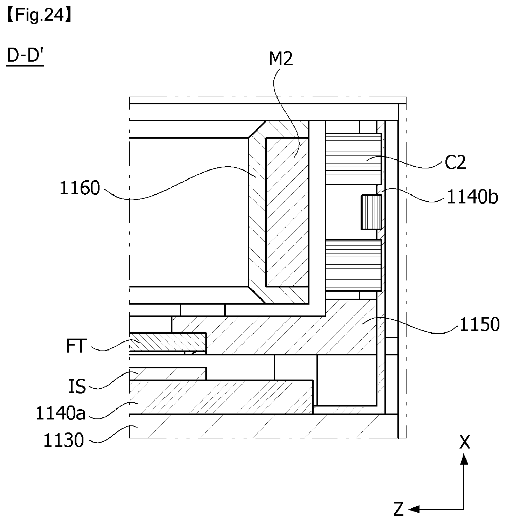

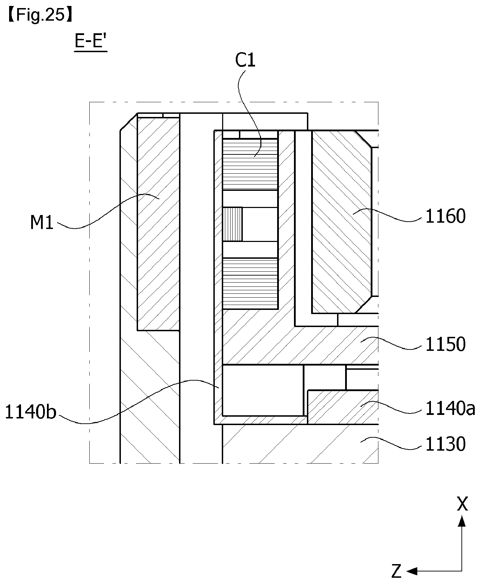

FIG. 22 is a view for describing a holding force for another type of actuation in the camera actuator according to the embodiment, FIG. 23 is a view for describing another type of actuation in the camera actuator according to the embodiment, FIG. 24 is a view taken along line DD' in FIG. 23, and FIG. 25 is a view taken along line EE' in FIG. 23.

Referring to FIGS. 22 to 25, the bobbin 1160 may move along the optical axis direction. In this case, the shaft 1151 disposed in the holder 1150 may be located adjacent to the second magnet M2 disposed in the bobbin 1160. As described above, the shaft 1151 and the second magnet M2 may overlap in the third direction. Further, the shaft 1151 and the second magnet M2 may form an attractive force with each other. Accordingly, a coupling force (for example, an attractive force) between the holder 1150 coupled to the shaft 1151 and the bobbin 1160 coupled to the second magnet M2 may be maintained. That is, the bobbin 1160 and the holder 1150 may maintain the coupling to each other even when the bobbin 1160 moves along the optical axis direction in the holder 1150.

The second magnet M2 may be disposed between the second coil C2 and the shaft 1151. That is, the second magnet M2 may face the second coil C2. In this case, the second magnet M2 may be located inside the second coil C2. In this case, the inside may correspond to a direction toward the optical axis, and the outside may correspond to a direction opposite to the inside.

Further, the substrate part (specifically, the second region) may be located outside the second coil. Accordingly, the substrate part, the second coil C2, and the second magnet M2 may be sequentially located inside. Further, in the embodiment, the second region 1140b may be located between the first coil C1 and the first magnet M1. In addition, the second coil C1 may also be located inside the second region 1140b. In this case, the first coil C1 and the first magnet M1 may be disposed spaced apart from each other. Further, the second region 1140b or substrate part 1140 may be located between the first coil C1 and the first magnet M1.

In addition, the first coil C1 and the first magnet M1 may overlap in a direction perpendicular to the optical axis. Furthermore, the second region 1140b or substrate part 1140 may be located between the Hall sensor and the first magnet M1. In other words, the first magnet M1 may be located outside the second region 1140b and the first coil C1. Further, the second region 1140b may be located outside the first coil C1.

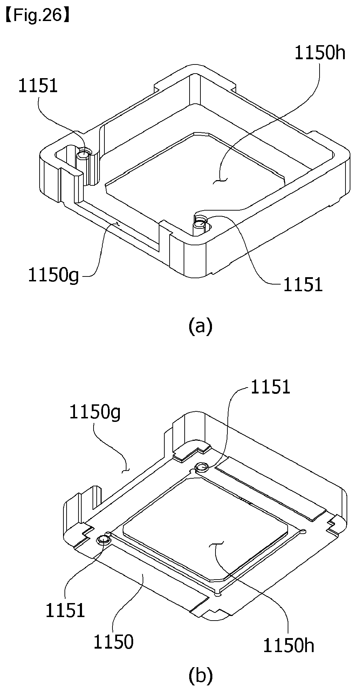

FIG. 26 is a plurality of perspective views of the holder in the camera actuator according to the embodiment.

Referring to FIG. 26, the holder 1150 may include a shaft hole or groove in which the shaft 1151 is seated. The shaft groove may be located adjacent to the holder groove 1150g. Accordingly, an attractive force between the second magnet and the shaft may increase.

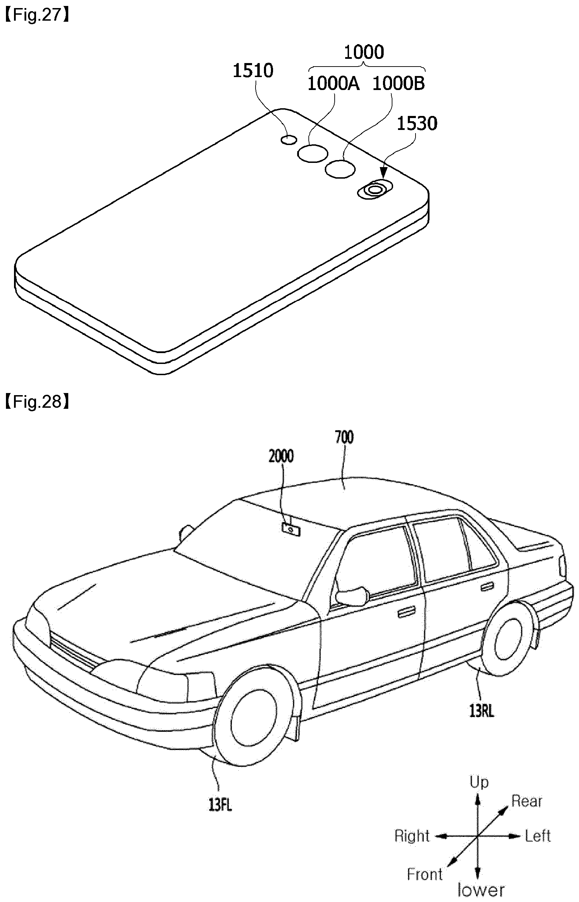

FIG. 27 is a perspective view of a mobile terminal to which the camera module according to the embodiment is applied.

As shown in FIG. 27, a mobile terminal 1500 of the embodiment may include a camera module 1000, a flash module 1530, and an autofocus device 1510 provided on the rear.

The camera module 1000 may include an image capturing function and an autofocus function. For example, the camera module 1000 may include an autofocus function using an image.

The camera module 1000 processes an image frame of a still image or moving image acquired by the image sensor in a capturing mode or a video call mode.

The processed image frame may be displayed on a certain display part and stored in a memory. A camera (not shown) may also be disposed on the front of a mobile terminal body.

For example, the camera module 1000 may include a first camera module 1000A and a second camera module 1000B, and OIS along with the AF function may be implemented by the first camera module 1000A.

The flash module 1530 may include a light-emitting element, which emits light, therein. The flash module 1530 may be operated by the camera operation of the mobile terminal or by control of a user.

The autofocus device 1510 may include one of the packages of surface light-emitting laser elements as a light-emitting part.

The autofocus device 1510 may include an autofocus function using a laser. The autofocus device 1510 may be mainly used in conditions where the autofocus function using the image of the camera module 1000 deteriorates, for example, in a close range of 10 m or less or in a dark environment.

The autofocus device 1510 may include a light-emitting part including a vertical cavity surface emitting laser (VCSEL) semiconductor element, and a light receiving part such as a photodiode which converts light energy into electrical energy.

FIG. 28 is a perspective view of a vehicle to which the camera module according to the embodiment is applied.

For example, FIG. 28 is an exterior view of a vehicle including a vehicle driving assistance device to which the camera module 1000 according to the embodiment is applied.

Referring to FIG. 28, a vehicle 700 of the embodiment may include wheels 13FL and 13FR rotated by a power source and certain sensors. The sensor may be a camera sensor 2000, but is not limited thereto.

The camera 2000 may be a camera sensor to which the camera module 1000 according to the embodiment is applied. The vehicle 700 of the embodiment may acquire image information through the camera sensor 2000 which captures a front image or a surrounding image, and may determine a lane non-identification situation and generate a virtual lane when the lane is not identified using the image information.

For example, the camera sensor 2000 may capture the front of the vehicle 700 to acquire the front image, and a processor (not shown) may analyze an object included in the front image to acquire the image information.

For example, when the image captured by the camera sensor 2000 includes an object such as a lane, an adjacent vehicle, a traffic obstruction, or a center divider, a curb, a street tree, or the like corresponding to an indirect road marking, the processor may detect the object and include the object in the image information. In this case, the processor may acquire distance information to the object detected through the camera sensor 2000 to further supplement the image information.

The image information may be information related to the object captured in the image. The camera sensor 2000 may include an image sensor and an image processing module.

The camera sensor 2000 may process still images or moving images acquired by an image sensor (for example, a complementary metal-oxide-semiconductor (CMOS) or a charge-coupled device (CCD)).

The image processing module may process still images or moving images acquired through the image sensor to extract the necessary information and transmit the extracted information to the processor.

**In** this case, the camera sensor 2000 may include a stereo camera to improve the measurement accuracy of the object and secure more information such as a distance between the vehicle 700 and the object, but is not limited thereto.

Although the embodiments have been mainly described above, these are merely examples and are not intended to limit the present invention, and it can be seen that various modifications and applications not exemplified herein are possible without departing from the essential characteristics of the present invention by those skilled in the art. For example, each of the components specifically shown in the embodiments may be modified and implemented. Further, it should be interpreted that differences related to the modifications and the applications are included in the scope of the present invention defined by the appended claims.

## Claims

1. A camera device comprising:
a stationary part;
a moving plate disposed on the stationary part;
a first movable part disposed on the moving plate;
a first driving part that tilts the first movable part based on at least one of a first axis and a second axis;
a first ball part disposed between the moving plate and the first movable part; and
a second ball part disposed between the moving plate and the stationary part,
wherein the first driving part includes a first coil disposed on the first movable part and a first magnet disposed on the stationary part.

2. The camera device of claim 1, wherein the first movable part includes an image sensor and a substrate part coupled to the image sensor.

3. The camera device of claim 2, comprising:
a second movable part disposed in the first movable part; and
a second driving part that moves the second movable part in an optical axis direction,
wherein the second driving part includes a second coil disposed on the first movable part and a second magnet disposed on the second movable part, and
the substrate part includes a first substrate part to which the image sensor is coupled and a second substrate part on which the first coil and the second coil are disposed.

4. The camera device of claim 3, wherein the first substrate part includes:
a body part on which the image sensor is disposed; and
an extending part connected to the body part and on which a connector or terminal is disposed.

5. The camera device of claim 4, wherein the second substrate part includes a first substrate connected to the first substrate part and on which the first coil is disposed and a second substrate on which the second coil is disposed.

6. The camera device of claim 5, wherein the first coil includes a first unit coil and a second unit coil, and
the first substrate includes a first unit substrate on which the first unit coil is disposed and a second unit substrate on which the second unit coil is disposed.

7. The camera device of claim 2, comprising a sensor base disposed between the moving plate and the substrate part.

8. The camera device of claim 1, wherein the stationary part includes a cover that accommodates the first movable part, and
the cover includes a first cover to which the first magnet is coupled and a second cover coupled to the first cover.

9. A camera device comprising:
a cover;
a moving plate disposed in the cover;
a substrate part disposed on the moving plate;
an image sensor disposed on the substrate part;
a holder disposed on the image sensor;
a bobbin disposed in the holder;
a first magnet disposed on the cover;
a second magnet disposed on the bobbin;
a first coil disposed on the substrate part and facing the first magnet and a second coil facing the second magnet;
a first ball part disposed between the moving plate and the cover; and
a second ball part disposed between the moving plate and the substrate part.

10. The camera device of claim 9, wherein the first ball part is disposed in a second axial direction, and
the second ball part is disposed in a first axial direction.
